# EUROPEAN PATENT SPECIFICATION

(11) **EP 0 615 553 B1**
(45) Date of publication and mention of the grant of the patent: **28.06.1995**
(21) Application number: 92925424.1
(22) Date of filing: 02.12.1992
(51) Int. Cl.: C25D 13/10, C25D 13/06, C09D 5/44, C09D 7/06

(54) **CATHODIC ELECTRODEPOSITION COATINGS CONTAINING A FLOW CONTROL AGENT**
FLIESSREGULIERUNGSMITTEL ENTHALTENDE KATHODISCH ABSCHEIDBARE ELEKTROTAUCHLACKE
REVETEMENT D'ELECTRODEPOSITION CATHODIQUE CONTENANT UN AGENT DE REGULATION DE L'ECOULEMENT

(30) Priority: 04.12.1991 US 802392
(43) Date of publication of application: 21.09.1994
(73) Proprietor: E.I. DU PONT DE NEMOURS AND COMPANY, Wilmington Delaware 19898 (US)
(72) Inventor: SIKORA, Robert, John, Northville, MI 48167 (US)
(74) Representative: Woodcraft, David Charles
(86) International application number: US9210218
(87) International publication number: WO9311284

(56) References cited:
- EP-A- 0 026 982
- DE-A- 2 441 624
- GB-A- 1 033 466
- US-A- 4 883 572

## Description

### BACKGROUND OF THE INVENTION

This invention is directed to a cathodic electrocoating composition and in particular to a cathodic electrocoating composition containing a flow control agent which improves the smoothness of an electrodeposited film of the composition.

The coating of electrically conductive substrates by an electrodeposition process (also called an electrocoating process) is a well known and important industrial process. Electrodeposition of primers to automotive substrates is widely used in the automotive industry. In this process, a conductive article, such as an autobody or an auto part, is immersed in a bath of a coating composition of an aqueous emulsion of film forming polymer and acts as an electrode in the electrodeposition process. An electric current is passed between the article and a counter-electrode in electrical contact with the agueous emulsion, until a desired coating is deposited on the article. In a cathodic electrocoating process, the article to be coated is the cathode and the counter-electrode is the anode.

Resin compositions used in the bath of a typical cathodic electrodeposition process also are well known in the art. These resins typically are made from polyepoxide resins which have been chain extended and then an adduct is formed to include amine groups in the resin. Amine groups typically are introduced through reaction of the resin with an amine compound. These resins are blended with a crosslinking agent and then neutralized with an acid to form a water emulsion which is usually referred to as a principal emulsion.

The principal emulsion is combined with a pigment paste, coalescent solvents, water, and other additives to form the electrocoating bath. The electrocoating bath is placed in an insulated tank containing the anode. The article to be coated is the cathode and is passed through the tank containing the electrodeposition bath. The thickness of the coating that is deposited on the article being electrocoated is a function of the bath characteristics, the electrical operating characteristics, the immersion time, and the like.

The resulting coated article is removed from the bath after a set period of time and is rinsed with deionized water. The coating on the article is cured typically in an oven at sufficient temperature to produce a crosslinked finish on the article.

Cathodic electrocoating compositions and resin compositions, coating baths, and cathodic electrodeposition processes are disclosed in Jerabek et al U.S. Patent 3,922,253 issued November 25, 1975; Wismer et al US 4,419,467 issued December 6, 1983; Belanger US 4,137,140 issued January 30, 1979 and Wismer et al US 4,468,307 issued August 25,1984.

A continuing problem with cathodic electrocoating compositions has been to formulate a composition that forms a smooth finish when electrodeposited and subsequently cured. Various additives have been used but tend to adversely affect the cure of the resulting finish. The flow control agent that is used in the cathodic electrocoating composition of this invention allows for the deposition of a smooth finish and does not adversely affect curing of the finish.

### SUMMARY OF THE INVENTION

The essential features of the invention are the subject-matter of independant claims 1 and 6; preferred features are the subject-matter of dependant claims 2 - 5 and 7 - 10.

### DETAILED DESCRIPTION OF THE INVENTION

The flow control agent is readily incorporated into the electrocoating composition since it is compatible with the other constituents of the composition. The flow control agent remains stable in the composition and in the electrocoating bath for extended periods of time under conventional bath operating conditions since it is not reactive with the other constituents in the composition. The flow control agent aids in flow of electrodeposited coatings to form smooth finishes.

The flow control agent is used in the electrocoating composition at a level of least 0.5 by weight, based on the total weight of binder solids in the electrocoating composition and preferably, it is used at a level of about 0.5-10% by weight. More preferably, about 1-3% by weight of the flow control agent is used. The binder of the electrocoating composition is the epoxy amine adduct and the blocked polyisocyanate crosslinking agent.

The flow control agent has the following formula: 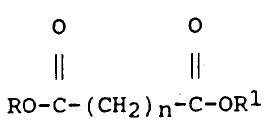
wherein R and R¹ are saturated aliphatic hydrocarbon groups preferably, methyl or ethyl group, and n = 2-7. Preferably, R and R¹ are methyl groups, and n = 3-4. Also, the flow control agent can be a mixture of the aliphatic dibasic acid esters.

Typically useful flow control agents are dimethylmalonate, diethylmalonate, dimethyl succinate, diethyl succinate, dimethyl glutarate, diethyl glutarate, dimethyl adipate, diethyl adipate, dimethyl pimelate, diethyl primelate, dimethyl suberate, diethyld suberate, dimethyl azelate, diethyl azelate and mixtures of any of the above.

One particularly preferred flow control agent is a mixture of dimethyl adipate and dimethyl glutarate which is sold as "Dibasic Ester - 3" by Du Pont.

The flow control agent can be added to the electrocoating composition at almost anytime. It can be added to the principal emulsion, to the bath or to the pigment paste used to form the electrocoating composition.

Most principal emulsions used in an electrocoating composition comprise an aqueous emulsion of a binder of an epoxy amine adduct blended with a cross-linking agent which has been neutralized with an acid to form a water soluble product.

The flow control agent is potentially usable with a variety of different cathodic electrocoat resins, but the preferred resin is the typical epoxy-amine adduct of the prior art. These resins are generally disclosed in U.S. Patent No. 4,419,467 which is incorporated herein by reference.

Preferred crosslinkers for the above resins are also well known in the prior art. These are aliphatic, cycloaliphatic and aromatic isocyanates such as hexamethylene diisocyanate, cyclohexamethylene diisocyanate, toluene diisocyanate, methylene diphenyl diisocyanate and the like. These isocyanates are pre-reacted with a blocking agent such as oximes, alcohols, and caprolactams which block the isocyanate functionality i.e. the crosslinking functionality. Upon heating the blocking agents separate, thereby providing a reactive isocyanate group and crosslinking occurs. Isocyanate crosslinkers and blocking agents are well known in the prior art and also are disclosed in the aforementioned U.S. Patent No. 4,419,467.

The cathodic binder of the epoxy amine adduct and the blocked isocyanate are the principal resinous ingredients in the electrocoating composition and are usually present in amounts of about 30 to 50 percent by weight of solids. To form an electrocoating bath, the solids are generally reduced with an aqueous medium.

Besides the binder resin described above, the electrocoating composition usually contains pigment which is incorporated into the composition in the form of a pigment paste. The pigment paste is prepared by grinding or dispersing a pigment into a grinding vehicle and optional ingredients such as wetting agents, surfactants, and defoamers. Any of the pigment grinding vehicles that are well known in the art can be used. After grinding, the particle size of the pigment should be as small as practical, generally, the particle size is about 6-8 using a Hegman grinding gauge.

Pigments which can be used in this invention include titanium dioxide, basic lead silicate, strontium chromate, carbon black, iron oxide, clay and the like. Pigments with high surface areas and oil absorbencies should be used judiciously because these can have an undesirable affect on coalescence and flow of the electrodeposited coating.

The pigment to binder weight ratio is also important and should be preferably less than 0.5:1, more preferably less than 0.4:1, and usually about 0.2 to 0.4:1. Higher pigment to binder weight ratios have been found to adversely affect coalescence and flow.

The coating compositions of the invention can contain optional ingredients such as wetting agents, surfactants, wetting agents, defoamers and the like. Examples of surfactants and wetting agents include alkyl imidazolines such as those available from Ciba-Geigy Industrial Chemicals as " Amine C", acetylenic alcohols available from Air Products and Chemicals as "Surfynol 104". These optional ingredients, when present, constitute from about 0.1 to 20 percent by weight of binder solids of the composition.

Optionally, plasticizers can be used to promote flow. Examples of useful plasticizers are high boiling water immiscible materials such as ethylene or propylene oxide adducts of nonyl phenols or bisphenol A. Plasticers are usually used at levels of about 0.1 to 15 percent by weight resin solids.

The electrocoating composition of this invention is an agueous dispersion. The term "dispersion" as used within the context of this invention is believed to be a two-phase translucent or opaque aqueous resinous binder system in which the binder is in the dispersed phase and water the continuous phase. The average particle size diameter of the binder phase is about 0.1 to 10 micronmeter preferably, less than 5 micronmeter. The concentration of the binder in the aqueous medium in general is not critical, but ordinarily the major portion of the aqueous dispersion is water. The aqueous dispersion usually contains from about 3 to 50 percent preferably 5 to 40 percent by weight binder solids. Aqueous binder concentrates which are to be further diluted with water when added to an electrocoating bath, generally have a range of binder solids of 10 to 30 percent weight.

The following example illustrates the invention. All parts and percentages are on a weight basis unless otherwise indicated.

### EXAMPLE

### Preparation of Chain Extended Polyepoxide

The following ingredients were charged into a suitable reaction vessel: 1478 parts Epon 828® (epoxy resin of diglycidyl ether of Bisphenol A from Shell Chemical Company having an epoxy equivalent weight of 188); 533 parts ethoxylated Bisphenol A having a hydroxy equivalent weight of 247 (Synfac 8009® from Milliken Company); 427 parts of Bisphenol A; and 121 parts xylene. The resulting reaction mixture was heated to 160°C under a nitrogen blanket and held at this temperature for 1 hour. 5.1 parts dimethyl benzyl amine were added and the mixture was held at 147°C until a 1150 epoxy equivalent weight was obtained. The reaction mixture was cooled to 98°C and 168 parts of diketimine (reaction product of diethylenetriamine and methyl isobutyl ketone at 72.7% solids) and 143 parts of methyl ethanol amine were added. The resulting mixture was held at 120°C for 1 hour and then 727 parts of methyl isobutyl ketone were added. The resulting resin solution had a non-volatile content of 75%.

### Preparation of Flex Emulsion Additive

A flex emulsion additive was prepared by charging 2322 parts of Jeffamine D-2000® (polyoxypropylene-diamine having a molecular weight of 1992 from Texaco Company) to a reaction vessel under a nitrogen atmosphere and heated to 90°C. A solution of 859 parts of Epon 1001® (polyglycidyl ether of Bisphenol A having an epoxy equivalent weight of 500 from Shell Chemical Company) in 345 parts of 2-butoxyethanol was added. An aqueous dispersion was formed by adding 68 parts of acetic acid and 5345 parts of deionized water.

### Preparation of Quaternizing Agent

| | Parts by Weight | NV* |
|---|---|---|
| Blocked Isocyanate Solution (2-Ethylhexanol half capped toluene diisocyanate in methyl isobutyl ketone) | 320.0 | 304.0 |
| Dimethylethanol amine | 87.2 | 87.2 |
| Aqueous lactic acid solution | 117.6 | 88.2 |
| 2-Butoxyethanol | 39.2 | |
| Total | 5̅6̅4̅.̅0̅ | 4̅7̅9̅.̅4̅ |

| | | |
|---|---|---|
| * Non-Volatiles | | |

The quaternizing agent was prepared by adding dimethylethanol amine to the blocked isocyanate solution in a suitable reaction vessel at ambient temperature. An exothermic reaction occured and the reaction mixture was stirred for one hour and held at a temperature of 80°C. Lactic acid solution was added followed by the addition of 2-butoxyethanol. The reaction mixture was stirred for an additional hour at 65°C to form the quaternizing agent.

### Preparation of Pigment Grinding Vehicle

| | Parts by Weight | NV* |
|---|---|---|
| Epon 829® (epoxy resin of diglycidyl ether of Bisphenol A from shell Chemical Company having an epoxy equivalent weight of 192-203) | 710.0 | 682.0 |
| Bisphenol A | 289.6 | 289.6 |
| Blocked isocyanate solution (described above) | 406.0 | 386.1 |
| Quaternizing Agent (prepared above) | 496.3 | 421.9 |
| Deionized water | 71.2 | |
| 2-Butoxyethanol | 1095.2 | |
| Total | 3̅0̅6̅8̅.̅3̅ | 1̅7̅7̅9̅.̅6̅ |

Epon 829® and Bisphenol A were charged under a nitrogen atmosphere to a suitable reaction vessel and heated to 150-160°C to initiate an exothermic reaction. The reaction mixture was cooled to 120°C and the blocked isocyanate solution was added. The temperature of the reaction mixture was held at 110-120°C for one hour, followed by the addition of 2-butoxyethanol. The reaction mixture then was cooled to 85-90°C, homogenized and then the deionized water was added followed by the addition of the Quaternizing agent. The resulting mixture had a solids content of about 58%.

### Preparation of Emulsion

| | Parts by Weight | NV |
|---|---|---|
| Chain Extended Polyepoxide (prepared above) | 3210 | 2440 |
| Crosslinking Resin Solution¹ | 2229 | 1560 |
| Downol PPH® (from Dow Chemical Co.) | 40 | |
| Surfactant² | 60 | |
| Deionized water | 5392 | |
| Lactic acid | 137 | |
| Flex emulsion additive (prepared | 964 | 347 |
| above) Total | 1203̅2̅ | 4̅3̅4̅7̅ |

| | | |
|---|---|---|
| ¹ Crosslinking resin solution is formed from half-capping toluene diisocyanate (80/20 2,4/2,6 isomer mixture) with 2-hexyloxy ethanol and reacting the resulting product with trimethylol propane in a 3:1 molar ratio in methyl isobutyl ketone to form a 70% solids solution. | | |
| ² Surfactant is a mixture of 120 parts Amine C from Ciba-Geigy, 120 parts acetylenic alcohol, commercially available as Surfynol 104®, 120 parts of 2-butoxy ethanol and 221 parts by weight of deionized water and 19 parts glacial acetic acid. | | |

The chain extended polyepoxide is thoroughly mixed with the crosslinking resin solution, Downol PPH®, lactic acid and the surfactant. Deionized water was added under agitation to form a dispersion and then the flex emulsion additive was blended into the resulting composition. The resulting dispersion has a solids content of 36% and a pH of 6.8. Solvent was removed from the dispersions and the solids content was adjusted to 36%.

### Preparation of Pigment Paste

| | Parts by Weight | NV |
|---|---|---|
| Pigment Grinding Vehicle (prepared above) | 266.20 | 154.64 |
| Deionized water | 455.30 | |
| Carbon black pigment | 25.98 | 24.26 |
| Aluminum silicate pigment | 51.85 | 54.96 |
| Lead silicate pigment | 22.24 | 24.26 |
| Dibutyl tin oxide | 16.34 | 17.00 |
| Titanium dioxide pigment | 296.23 | 292.15 |
| Total | 1134.14 | 567.28 |

The above constituents were charged into a conventional sand mill and ground to a No. 7 Hegman fineness.

### Preparation of an Electrocoating Baths A-D

| | Parts by Weight | | | |
|---|---|---|---|---|
| | Bath A | B | C | D |
| Emulsion (prepared above) | 1517 | 1517 | 1517 | 1517 |
| Pigment Paste (prepared above) | 508 | 508 | 508 | 508 |
| Deionized water | 1975 | 1972 | 1969 | 1966 |
| Flow Control Agent (Dibasic Ester - 3 previously described herein) | 0 | 3 | 6 | 9 |
| Total | 4̅0̅0̅0̅ | 4̅0̅0̅0̅ | 4̅0̅0̅0̅ | 4̅0̅0̅0̅ |

Electrocoating baths A-D were prepared by blending the above ingredients together. A separate zinc phosphate coated cold-rolled steel panel was cathodically electrocoated in each bath at 225 volts for 2 minutes at a bath temperature of 28°C and was baked at 182°C for 17 minutes.

The smoothness of each panel was measured with a profilometer. The results are as follows.

| Electrocoating Bath | A | B | C | D |
|---|---|---|---|---|
| Profile (Microns) | 0.432 | 0.406 | 0.356 | 0.279 |

The results show that Baths B, C and D which contained increasing amounts of flow control agent had a smoother finish than Bath A which did not contain the flow control agent. Other properties such as chip resistance and solvent resistance were not adversely affected by the flow control agent.

## Claims

1. A cathodic electrocoating composition, comprising an aqueous carrier having dispersed therein a film forming binder comprising an epoxy-amine adduct and a blocked polyisocyanate crosslinking agent; characterized in that the composition contains a flow control agent of the formula 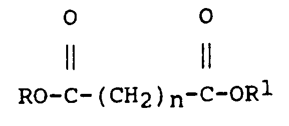 wherein R and R1 are aliphatic hydrocarbon groups, and n = 2 to 7.

2. The cathodic electrocoating composition of claim 1 wherein R and R1 are individually selected from methyl or ethyl groups.

3. The cathodic electrocoating composition of claim 1 wherein the flow control agent is present in an amount of about 0.5-10% by weight, based on the weight of the film forming binder of the composition.

4. The cathodic electrocoating composition of claim 3 wherein R and R1 are methyl groups and n = 3-4.

5. The cathodic electrocoating composition of claim 3 wherein the flow control agent consists of a mixture of dimethyl adipate and dimethyl glutarate.

6. A method of preparing a cathodic electrocoating composition comprising the following steps in any workable order:
(a) preparing an epoxy-amine adduct;
(b) preparing a blocked polyisocyanate crosslinking agent;
(c) blending the epoxy amine adduct with the blocked polyisocyanate crosslinking agent;
(d) neutralizing the epoxy-amine adduct with an organic acid to form an emulsion;
(e) blending the emulsion with a pigment paste; and
(e) adding a flow control agent to the electrocoating composition to improve flow of the coating on electrodeposition and curing of the coating; wherein the flow control agent consists essentially of a composition of the formula 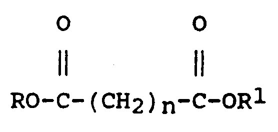 wherein R and R1 are aliphatic hydrocarbon groups, and n = 2-7.

7. The method of claim 6 wherein R and R1 are individually selected from the groups of methyl or ethyl groups.

8. The method of claim 6 wherein the flow control agent is present in an amount of about 0.5-10% by weight, based on the weight of the film forming constituents of the composition.

9. The method of claim 8 wherein R and R1 are methyl groups and n = 3-4 of the flow control agent.

10. The method of claim 9 wherein the flow control agent consist of a mixture of dimethyl adipate and dimethyl glutarate.

## Patentansprüche

1. Kathodische Elektroüberzugsmasse, umfassend einen wäßrigen Träger, der darin dispergiert ein filmbildendes Bindemittel aufweist, umfassend ein Epoxy-Amin-Addukt und ein blockiertes Polyisocyanat-Vernetzungsmittel, dadurch gekennzeichnet, daß die Masse ein Flußkontrollmittel der Formel 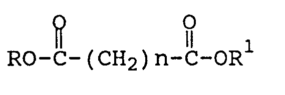 aufweist, worin R und R¹ alliphatische Kohlenwasserstoffgruppen darstellen und n=2 bis 7.

2. Kathodische Elektroüberzugsmasse nach Anspruch 1, worin R und R¹ einzeln ausgewählt sind aus Methyl- oder Ethylgruppen.

3. Kathodische Elektroüberzugsmasse nach Anspruch 1, worin das Flußkontrollmittel in einer Menge von etwa 0,5 bis 10 Gew.-% vorhanden ist, bezogen auf das Gewicht des filmbildenden Bindemittels der Masse.

4. Kathodische Elektroüberzugsmasse nach Anspruch 3, worin R und R¹ für Methylgruppen stehen und n=3 bis 4.

5. Kathodische Elektroüberzugsmasse nach Anspruch 3, worin das Flußkontrollmittel besteht aus einem Gemisch von Dimethyladipat und Dimethylglutarat.

6. Verfahren zur Herstellung einer kathodischen Elektroüberzugsmasse, umfassend die folgenden Stufen in irgendeiner ausführbaren Reihenfolge:
(a) Herstellen eines Epoxy-Amin-Adukts,
(b) Herstellen eines blockierten Polyisocyanat-Vernetzungsmittels,
(c) Mischen des Epoxy-Amin-Adukts mit dem blockierten Polyisocyanat-Vernetzungsmittel,
(d) Neutralisieren des Epoxy-Amin-Adukts mit einer organischen Säure unter Bildung einer Emulsion,
(e) Mischen der Emulsion mit einer Pigmentpaste, und
(f) Zugeben eines Flußkontrollmittels zu der Elektroüberzugsmasse zur Verbesserung des Flusses des Überzugs während der Elektroabscheidung und Härten des Überzugs, wobei das Flußkontrollmittel im wesentlichen besteht aus einer Zusammensetzung der Formel 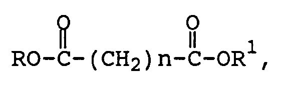 worin R und R¹ für aliphatische Kohlenwasserstoffgruppen stehen und n=2 - 7.

7. Verfahren nach Anspruch 6, bei dem R und R¹ einzeln ausgewählt werden aus den Gruppen von Methyl- und Ethylgruppen.

8. Verfahren nach Anspruch 6, bei dem das Flußkontrollmittel in einer Menge von etwa 0,5 bis 10 Gew.-%, bezogen auf das Gewicht der filmbildenden Bestandteile der Masse, vorhanden ist.

9. Verfahren nach Anspruch 8, bei dem R und R¹ für Methylgruppen stehen und n=3 - 4 bei dem Flußkontrollmittel.

10. Verfahren nach Anspruch 9, bei dem das Flußkontrollmittel besteht aus einem Gemisch von Dimethyladipat und Dimethylglutarat.

## Revendications

1. Une composition de revêtement par électro-déposition cathodique, comprenant un véhicule aqueux dans lequel est dispersé un liant filmogène comprenant un produit d'addition époxyde-amine et un agent de réticulation du type polyisocyanate bloqué ; caractérisée en ce que la composition contient un agent de réglage des propriétés d'écoulement de la formule 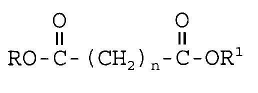 dans laquelle R et R¹ sont des groupes hydrocarbonés aliphatiques et n = 2 à 7.

2. La composition de revêtement par électro-déposition cathodique de la revendication 1, dans laquelle R et R¹ sont choisis individuellement parmi les groupes méthyle ou éthyle.

3. La composition de revêtement par électro-déposition cathodique de la revendication 1, dans laquelle l'agent de réglage des propriétés d'écoulement est présent en une quantité d'environ 0,5 à 10 % en poids par rapport au poids du liant filmogène de la composition.

4. La composition de revêtement par électro-déposition cathodique de la revendication 3, dans laquelle R et R¹ sont des groupes méthyle et n = 3 à 4.

5. La composition de revêtement par électro-déposition cathodique de la revendication 3, dans laquelle l'agent de réglage des propriétés d'écoulement consiste en un mélange d'adipate de diméthyle et de glutarate de diméthyle.

6. Un procédé de préparation d'une composition de revêtement par électrodéposition cathodique comprenant les étapes suivantes dans tout ordre applicable :
(a) préparer un produit d'addition époxyde-amine ;
(b) préparer un agent de réticulation du type polyisocyanate bloqué ;
(c) mélanger le produit d'addition époxyde-amine avec l'agent de réticulation du type polyisocyanate bloqué ;
(d) neutraliser le produit d'addition époxyde-amine avec un acide organique pour former une émulsion ;
(e) mélanger l'émulsion avec une pâte de pigment ; et
(e) ajouter un agent de réglage des propriétés d'écoulement à la composition de revêtement par électrodéposition afin d'améliorer l'écoulement du revêtement lors de l'électrodéposition et du durcissement du revêtement ; dans lequel l'agent de réglage des propriétés d'écoulement est essentiellement constitué d'une composition de la formule 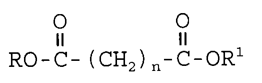 dans laquelle R et R¹ sont des groupes hydrocarbonés aliphatiques et n = 2 à 7.

7. Le procédé de la revendication 6, dans lequel R et R¹ sont choisis individuellement parmi les groupes méthyle et éthyle.

8. Le procédé de la revendication 6, dans lequel l'agent de réglage des propriétés d'écoulement est présent en une quantité d'environ 0,5 à 10 % en poids par rapport au poids des constituants filmogènes de la composition.

9. Le procédé de la revendication 8, dans lequel R et R¹ sont des groupes méthyle et n = 3 à 4 dans l'agent de réglage des propriétés d'écoulement.

10. Le procédé de la revendication 9, dans lequel l'agent de réglage des propriétés d'écoulement consiste en un mélange d'adipate de diméthyle et de glutarate de diméthyle.
